Europäisches Patentamt

European Patent Office

Office européen des brevets

(11) Publication number: **0 426 663 B1**

# EUROPEAN PATENT SPECIFICATION

(45) Date of publication of patent specification: **23.12.92**  (51) Int. Cl.5: **G06F 1/00**

(21) Application number: **88907676.6**

(22) Date of filing: **28.07.88**

(86) International application number:
**PCT/EP88/00684**

(87) International publication number:
**WO 90/01189 (08.02.90 90/04)**

(54) **APPARATUS FOR DEFINED SWITCHING OF A MICROCOMPUTER TO STANDBY MODE.**

(43) Date of publication of application:
**15.05.91 Bulletin 91/20**

(45) Publication of the grant of the patent:
**23.12.92 Bulletin 92/52**

(84) Designated Contracting States:
**DE FR GB**

(56) References cited:
**EP-A- 0 284 276**
**DE-A- 3 340 008**
**DE-C- 3 248 680**
**US-A- 4 512 019**

**Patent Abstracts of Japan, vol. 9, No. 214.
p384, abstract of JP 60-73720, publ.
1985-04-25, NITSUSHIN DENKI K.K.**

**Patent Abstracts of Japan, vol. 10, No. 389,
p531, abstract of JP 61-177523, publ.
1986-08-09, NEC Corp.**

(73) Proprietor: **ROBERT BOSCH GMBH
Postfach 30 02 20
W-7000 Stuttgart 30(DE)**

(72) Inventor: **HÜSER, Klaus
Artusweg 21
W-7000 Stuttgart 30(DE)**

Rank Xerox (UK) Business Services

## Description

The present invention relates to circuitry for switching a microcomputer to a standby mode once the microcomputer is in a defined state, normally a reset state.

It is known that if one wishes to retain information in a random access memory (RAM) it is necessary to provide a standby power supply to the RAM even when an associated microcomputer is switched off Care must be taken, however, to ensure that the information contained in the RAM is not corrupted when the computer is switched off as may happen should the computer be switched off when in the middle of accessing a RAM.

Various circuits have been proposed for achieving a control switch-over to standby supply for RAM. Unfortunately, many of these circuits utilise a number of components and occupy a relatively large amount of space. Until now, this has rendered them inappropriate for incorporation in hybrid devices such as are used for many circuit electronic equipment fitted to motor vehicles.

The US-A-4 512 019 relates to a circuit for monitoring a microcomputer and in particular to a circuit for resetting the microcomputer when a malfunctioning occurs or when the supply voltage sinks to a value below a predetermined level.

In Patent Abstracts of Japan, Vol. 9, No. 214, p. 384 & JP 60-73 720 it is described how to prevent the destruction of the stored content of a RAM, by connecting the base of a switching transistor installed between the main power source and the power input terminal of the RAM to the output terminal of a voltage-drop detecting element.

A possibility to secure operation as long as the voltage variation of main power source is within the range of the recommended working source voltage of a CMOS-RAM is described in Patent Abstracts of Japan, Vol. 10, No. 389, p. 531 & JP 61-177 523. Therefor a relay contact for switching between the main power source and a chargeable type secondary backup battery is proposed.

It is an object of the present invention to provide circuitry for performing controlled switching of the power supply to a RAM associated with a microcomputer.

The present invention provides a power supply arrangement for a microcomputer to which a RAM is associated comprising regulator means which are connected via an input terminal to a battery and for supplying a regulated main voltage or a regulated standby voltage to the microcomputer, and an IC circuit having a plurality of circuit elements which is connected to the microcomputer for producing a resetting signal to the microcomputer, wherein a circuit element of the IC circuit has an output connected to a control input of the regulator means via a threshold circuit, and is arranged to generate a control signal not before the capacitor of the threshold circuit has changed in potential, meanwhile the microcomputer has reached a defined state for switching the regulator means (12), in response to the resetting signal, for supplying a regulated standby voltage to the microcomputer. The advantage of the above arrangement is that an existing circuit can be utilized without any re-design of the circuit itself.

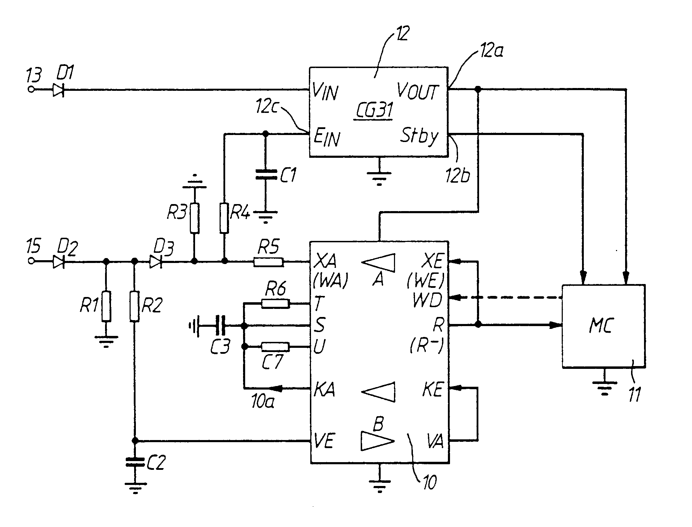

Features and advantages of the present invention will become apparent from the following description of an embodiment thereof given by way of example with reference to the accompanying drawing which shows a circuit diagram of a control circuit for switching a microcomputer to standby mode.

The present invention is based on an existing IC circuit represented generally by the reference numeral 10 and which comprises a number of operational amplifiers and components of a "watchdog circuit".

The construction of the circuit 10 and its operation will be described in detail later.

Associated with circuit 10 is a microcomputer 11 supplied with power from a voltage regulator 12 which in turn is connected via the input terminal 13 to the battery of the vehicle. The voltage regulator 12 supplies two regulated voltages; a main regulated power supply from the V out terminal 12a during normal operation and standby power supply from the terminal 12b. The standby power supply is used to retain information in RAM associated with the microcomputer 11. As is known, operation of the ignition switch connected to terminal 15 is detected and a signal supplied to an ON input 12c which causes the voltage regulator to switch on or off.

In the present embodiment, the terminal 15 connected to the ignition switch is connected to the terminal 12c of the voltage regulator via diodes D2, D3 And resistor R4. The diode D1 is also inserted in the connection between the terminal 13 and the main power supply to the regulator 12. The diodes D1 and D2 are used as polarity reversal protection diodes.

With the ignition switch in its on condition, a voltage signal is present on the terminal 15 and the voltage regulator is in its normal condition with power being supplied to the microcomputer 11 from the output terminal 12a. A signal is also present on the VE input of the circuit 10 via resistor R2 which is connected to the output of the diode D2. The input terminal VE is the non-inverted input of an operational amplifier whose output is taken from the terminal VA and fed to the input terminal KE of a further non-inverting operational amplifier having an open-collector output KA. The output KA is of high impedance and enables the watchdog circuit comprising part of IC 10 and containing external components R6, R7, C3. The watchdog circuit is supplied with a watchdog signal WD shown in broken line from the microcomputer 11 by means of which it monitors operation of the computer and provides a reset signal in the event of a malfunction. It also provides a reset signal in response to a change in potential at the input S. Thus a change in potential at the Input S is reflected by a change in output potential at the output R (reset) which is connected to the microcomputer 11. The watchdog circuit may be a monitoring circuit of the type described in U.S. 4512019. In normal operation, with the ignition switch closed, the potential at input S is high which means that the output at R is low and the microcomputer 11 is not reset. The level of the signal at output R is fed to the inverting input XE of a further operational amplifier whose output XA is connected via resistors R5 and R4 to the control terminal 12c of the voltage regulator 12. Diode D3 decouples the output Xa from the Input Ve.

When the ignition switch is operated to switch it off, the voltage on terminal 15 disappears and after a capacitor C2 connected to the input terminal VE has discharged below a low triggering threshold, the output VA switches to a low potential which in turn switches the output KA to a low potential to turn off the watchdog circuit by lowering the potential at input S. In turn, the output R goes high which resets the microcomputer 11 and also provides a high potential input to the terminal XE. Because the amplifier connected between XE and XA is inverting, the potential at output XA goes low and this in turn causes the potential at 12c to drop to a low potential after a capacitor C1 connected thereto has discharged. A low potential at 12c causes a first transistor in the regulator 12 to switch on thus removing voltage from the base of a main transistor and turning it off. This causes the voltage regulator to switch to provide a standby voltage on the terminal 12b to maintain the RAM.

It will be appreciated that the above arrangement can be modified to cater for different types of circuit 10. For example, the flip flop between terminals S and R could provide a non-inverted output which would result in a change for the amplifier connected between terminals XE and XA to be a non-inverting amplifier. Further, as indicated by the broken lines the microcontroller itself, by detecting a low voltage at VA, can provide the necessary signal to cause the circuit 10 to generate the appropriate change in potential at the terminal 12c of the voltage regulator to switch the voltage regulator to a standby mode.

## Claims

1. A power supply arrangement for a microcomputer (11) to which a RAM is associated comprising regulator means (12) which are connected via an input terminal (13) to a battery and for supplying a regulated main voltage or a regulated standby voltage to the microcomputer (11), and an IC circuit (10) having a plurality of circuit elements which is connected to the microcomputer for producing a resetting signal to the microcomputer, wherein a circuit element of the IC circuit (10) has an output (XA) connected to a control input (12c) of the regulator means (12) via a threshold circuit (C1 R4, R3), and is arranged to generate a control signal not before the capacitor (C1) of the threshold circuit has changed in potential, meanwhile the microcomputer (11) has reached a defined state for switching the regulator means (12), in response to the resetting signal, for supplying a regulated standby voltage to the microcomputer (11).

2. An arrangement according to claim 1, wherein the resetting signal is produced by the switching of an ignition switch.

## Patentansprüche

1. Eine Versorgungsspannungsanordnung für einen Mikrocomputer (11), welcher mit einem RAM versehen ist, enthaltend Regelmittel (12), welche über einen Eingang (13) mit einer Batterie zur Lieferung einer geregelten Hauptspannung oder einer geregelten Bereitschaftsspannung für den Mikrocomputer (11) verbunden sind, und einem IC-Schaltkreis (10) mit einer Vielzahl von Schaltkreiselementen, welcher mit dem Mikrocomputer zur Erzeugung eines Rücksetzsignals für den Mikrocomputer verbunden ist, wobei ein Schaltkreiselement des IC-Schaltkreises (10) einen Ausgang (XA) hat, der mit einem Steuereingang (12c) der Regelmittel (12) über einen Schwellspannungsschaltkreis (C1, R4, R3) verbunden ist, und der so ausgebildet ist, daß als Folge des Rücksetzsignals, zur Lieferung der geregelten Bereitschaftsspannung für den Mikrocomputer (11) ein Steuersignal erzeugt wird nicht bevor der Kondensator (C1) des Schwellspanungsschaltkreises sein Potential geändert hat, so daß während dessen der Mikrocomputer (11) einen definierten Zustand zum Umschalten der Regelmittel (12) erreicht hat.

2. Eine Anordnung nach Anspruch 1, dadurch gekennzeichnet, daß das Rücksetzsignal beim Schalten des Zündschalters erzeugt wird.

## Revendications

1. Dispositif d'alimentation de puissance d'un micro-ordinateur (11) auquel est associée une mémoire vive (RAM), comprenant des moyens de régulateur (12) branchés à une batterie par une borne d'entrée (13) et destinés à fournir une tension principale régulée ou une tension d'attente régulée au microordinateur (11), et un circuit intégré (10) comportant un certain nombre d'éléments de circuit branchés au micro-ordinateur pour produire un signal de remise à l'état initial de ce micro-ordinateur, dispositif d'alimentation caractérisé en ce qu'un élément de circuit du circuit intégré (10) comporte une sortie (XA) branchée à une entrée de commande (12c) des moyens de régulateur (12) par l'intermédiaire d'un circuit de seuil (C1, R4, R3), et en ce que l'élément de circuit est conçu pour générer un signal de commande mais pas avant que le condensateur (C1) du circuit de seuil ait changé de potentiel, tandis que pendant ce temps le micro-ordinateur (11) a atteint un état défini pour commuter les moyens de régulateur (12) en réponse au signal de remise à l'état initial, de manière à fournir une tension d'attente régulée au micro-ordinateur (11).

2. Dispositif selon la revendication 1, caractérisé en ce que le signal de remise à l'état initial est produit par la commutation d'un commutateur d'allumage.